# EUROPÄISCHE PATENTSCHRIFT

(11) **EP 3 177 852 B1**
(45) Veröffentlichungstag und Bekanntmachung des Hinweises auf die Patenterteilung: **11.05.2022**
(21) Anmeldenummer: 15760366.3
(22) Anmeldetag: 04.08.2015
(51) Int. Cl.: F16F 15/14, F16F 15/123

(54) **ANTRIEBSSTRANG**
POWERTRAIN
GROUPE DE PROPULSION

(30) Priorität: 06.08.2014 DE 102014215582
(43) Veröffentlichungstag der Anmeldung: 14.06.2017
(73) Patentinhaber: Schaeffler Technologies AG & Co. KG, 91074 Herzogenaurach (DE)
(72) Erfinder: GVOZDEV, Mikhail, 77815 Bühl (DE); CHARLES, Sebastien, F-67100 Strasbourg (FR); HEPPERLE, Walter, 77652 Offenburg (DE); COYNE, Marc, F-67000 Strasbourg (FR); SEEBACHER, Roland, 77743 Neuried-Ichenheim (DE)
(86) Internationale Anmeldenummer: PCT/DE2015/200432
(87) Internationale Veröffentlichungsnummer: WO 2016/019961

(56) Entgegenhaltungen:
- DE-A1-102009 052 055
- DE-A1-102012 219 959
- DE-A1-102012 221 544

## Beschreibung

Die Erfindung betrifft einen Antriebsstrang, insbesondere einen Antriebsstrang eines Kraftfahrzeugs mit einer Brennkraftmaschine.

Die Erfindung betrifft einen Antriebsstrang mit einer Brennkraftmaschine mit einer vorgegebenen Anzahl von Zylindern mit einem ersten Betriebszustand, in dem alle Zylinder betrieben werden, und einem zweiten Betriebszustand, in dem ein Teil der Zylinder abgeschaltet ist. Solche Systeme sind auch als Zylinderabschaltung (ZAS) bekannt. Der Antriebsstrang weist darüber hinaus eine Drehschwingungsdämpfungsvorrichtung mit zumindest einem Drehschwingungsdämpfer und mit zumindest einem Fliehkraftpendel auf, um die Drehschwingungen des Antriebsstrangs zu dämpfen.

Die DE 10 2012 221 544 A1 offenbart einen Antriebsstrang mit zwei Fliehkraftpendeln, die jeweils auf unterschiedliche Frequenzen der Schwingungsanregung ausgelegt sind und die im Antriebsstrang jeweils an unterschiedlichen Aggregaten angeordnet sind. Dies bedarf einen erhöhten Bauraumbedarf an verschiedenen stellen des Antriebsstrangs, der nicht immer zur Verfügung steht.

Das Dokument DE 10 2012 219959 A1, welches als der nächstliegende Stand der Technik angesehen wird, offenbart die Merkmale der Oberbegriffe der Ansprüche 1 und 6.

Es ist die Aufgabe der vorliegenden Erfindung, eine Verbindungsvorrichtung zu schaffen, welche eine einfache und kostengünstige Anbindung der Fluidleitung an das Gehäuse erlaubt und welche an zwei Eigenfrequenzen einer Brennkraftmaschine angepasst ist.

Auch ist es vorteilhaft, wenn die Verbindungsvorrichtung bauraumsparend ausgebildet ist.

Die Aufgabe der Erfindung wird sowohl mit den Merkmalen von Anspruch 1 als auch mit den Merkmalen von Anspruch 6 gelöst.

Ein Ausführungsbeispiel der Erfindung betrifft einen Antriebsstrang mit einer Brennkraftmaschine mit einer vorgegebenen Anzahl von Zylindern mit einem ersten Betriebszustand, in dem alle Zylinder betrieben werden, und mit einem zweiten Betriebszustand, in dem ein Teil der Zylinder abgeschaltet ist und entsprechend auch nur ein Teil der Zylinder betrieben werden, und mit einer Drehschwingungsdämpfungsvorrichtung mit zumindest einem Drehschwingungsdämpfer und mit zumindest einem Fliehkraftpendel, wobei das Fliehkraftpendel auf das Drehschwingungsverhalten des ersten Betriebszustands und auf das Drehschwingungsverhalten des zweiten Betriebszustandes abgestimmt ist. So ist das Fliehkraftpendel an zwei Eigenfrequenzen der Brennkraftmaschine angepasst, wie auf die Eigenfrequenz der Haupterregerordnung und auf die doppelte Frequenz der Eigenfrequenz der Haupterregerordnung. Auch kann bei einer Zylinderabschaltung von beispielsweise vier oder zwei Zylindern von insgesamt acht oder vier Zylindern bewirkt werden, dass eine weitere Frequenz des Fliehkraftpendels der

Haupterregerordnung des abgeschalteten Systems, also des zweiten Betriebszustands, entspricht. Dadurch, dass nur ein Fliehkraftpendel mit zwei Eigenfrequenzen vorgesehen ist, kann dieses an nur einem Aggregat des Antriebsstrangs angeordnet werden, was insgesamt dann nur einen reduzierten Bauraum benötigt.

Auch ist es vorteilhaft, wenn das Fliehkraftpendel auch auf die Haupterregerordnung der Brennkraftmaschine im zweiten Betriebszustand abgestimmt ist. Dies ist dann auch vorteilhaft, weil dann auch in dem zweiten Betriebszustand eine optimale Dämpfung vorliegt.

Auch ist es zweckmäßig, wenn das Fliehkraftpendel auf die Haupterregerordnung der Brennkraftmaschine im ersten Betriebszustand und auf die Frequenz der doppelten Haupterregerordnung der Brennkraftmaschine im ersten Betriebszustand abgestimmt ist. Somit wird bei Abschaltung der Hälfte der Zylinder im zweiten Betriebszustand eine gute Dämpfungswirkung erzielt.

Besonders vorteilhaft ist es, wenn die Drehschwingungsdämpfungsvorrichtung zumindest einen ersten Drehschwingungsdämpfer aufweist, der als Zweimassenschwungrad mit Primärmasse und Sekundärmasse und einer dazwischen wirkenden Dämpfungsstufe und/oder als Drehschwingungsdämpfer in einer Kupplungsscheibe einer im Antriebsstrang zwischen Brennkraftmaschine und Getriebe angeordneten Reibungskupplung ausgebildet ist. Damit kann das Fliehkraftpendel an ein Element der genannten Drehschwingungsdämpfer angeordnet oder damit integriert werden, was besonders einfach in der Herstellung und bei der Ausnutzung des verfügbaren Bauraums ist.

Auch ist es vorteilhaft, wenn das Fliehkraftpendel auf der Primärmasse oder der Sekundärmasse des ersten Drehschwingungsdämpfers angeordnet ist. Dies kann günstig mit dem Federdämpfer des Zweimassenschwungrads als ersten Drehschwingungsdämpfer dargestellt werden.

Auch ist es zweckmäßig, wenn das Fliehkraftpendel auf der Reibungskupplung oder auf dem Drehschwingungsdämpfer der Kupplungsscheibe der Reibungskupplung angeordnet ist.

Besonders vorteilhaft ist es, wenn das Fliehkraftpendel zumindest eine erste Pendelmasse aufweist, welche auf die Haupterregerordnung der Brennkraftmaschine im ersten Betriebszustand abgestimmt ist und zumindest eine zweite Pendelmasse aufweist, welche auf die doppelte Haupterregerordnung der Brennkraftmaschine im ersten Betriebszustand. Auch ist es Vorteilhaft, wenn auch auf die Haupterregerordnung des zweiten Betriebszustands abgestimmt ist.

Dabei ist es besonders vorteilhaft, wenn das Fliehkraftpendel zwei oder mehr erste Pendelmasse aufweist und zwei oder mehr zweite Pendelmassen aufweist. Dadurch kann eine effektive Dämpfung erreicht werden, wobei bei paarweiser Anordnung der Pendelmassen eine günstige Massenverteilung erreicht wird.

Auch ist es gemäß eines erfindungsgemäßen Gedankens vorteilhaft, wenn das Massenverhältnis der Masse der ersten Pendelmasse bzw. Pendelmassen zu der Masse der zweiten Pendelmasse bzw. Pendelmassen gleich oder ungleich ist, wobei es insbesondere 50:50 oder 60:40 ist. So kann die Dämpfung in den beiden Betriebszuständen an den tatsächlichen Bedarf bei den vorliegenden Drehschwingungen angepasst werden.

Die vorliegende Erfindung wird nachfolgend anhand bevorzugter Ausführungsbeispiele in Verbindung mit den zugehörigen Figuren näher erläutert:
Dabei zeigt:
- Figur 1: einen schematisch und teilweise dargestellten Antriebsstrang mit einer Drehschwingungsdämpfungsvorrichtung mit zwei Drehschwingungsdämpfern und einem sekundärseitig angeordneten Fliehkraftpendel,
- Figur 2: eine Drehmomentkennlinie des Antriebsstrangs gemäß Figur 1,
- Figur 3: einen schematisch und teilweise dargestellten Antriebsstrang mit einer Drehschwingungsdämpfungsvorrichtung mit zwei Drehschwingungsdämpfern und einem primärseitig angeordneten Fliehkraftpendel,
- Figur 4: eine Drehmomentkennlinie des Antriebsstrangs gemäß Figur 3,
- Figur 5: einen schematisch und teilweise dargestellten Antriebsstrang mit einer Drehschwingungsdämpfungsvorrichtung mit zwei Drehschwingungsdämpfern und einem sekundärseitig angeordneten Fliehkraftpendel und mit einer weichen Dämpfungskennlinie C1,
- Figur 6: eine Drehmomentkennlinie des Antriebsstrangs gemäß Figur 5,
- Figur 7: einen schematisch und teilweise dargestellten Antriebsstrang mit einer Drehschwingungsdämpfungsvorrichtung mit zwei Drehschwingungsdämpfern und einem primärseitig angeordneten Fliehkraftpendel und mt einer weichen Dämpfungskennlinie C1,
- Figur 8: eine Drehmomentkennlinie des Antriebsstrangs gemäß Figur 7,
- Figur 9: einen schematisch und teilweise dargestellten Antriebsstrang mit einer Drehschwingungsdämpfungsvorrichtung mit zwei Drehschwingungsdämpfern und einem an der Kupplungsscheibe angeordneten Fliehkraftpendel,
- Figur 10: eine Drehmomentkennlinie des Antriebsstrangs gemäß Figur 9,
- Figur 11: einen schematisch und teilweise dargestellten Antriebsstrang mit einer Drehschwingungsdämpfungsvorrichtung mit zwei Drehschwingungsdämpfern und einem an der Kupplungsscheibe angeordneten Fliehkraftpendel mit einer weichen Dämpfungskennlinie C1,
- Figur 12: eine Drehmomentkennlinie des Antriebsstrangs gemäß Figur 11,
- Figur 13: einen schematisch und teilweise dargestellten Antriebsstrang mit einer Drehschwingungsdämpfungsvorrichtung mit einem Drehschwingungsdämpfern an der Kupplungsscheibe und mit einem an der Kupplungsscheibe angeordneten Fliehkraftpendel,
- Figur 14: eine Drehmomentkennlinie des Antriebsstrangs gemäß Figur 13,
- Figur 15: einen schematisch und teilweise dargestellten Antriebsstrang mit einer Drehschwingungsdämpfungsvorrichtung mit einem Drehschwingungsdämpfern an der Kupplungsscheibe und mit einem an der Kupplungsscheibe angeordneten Fliehkraftpendel und mit einer weichen Dämpferkennlinie C1, und
- Figur 16: eine Drehmomentkennlinie des Antriebsstrangs gemäß Figur 15.

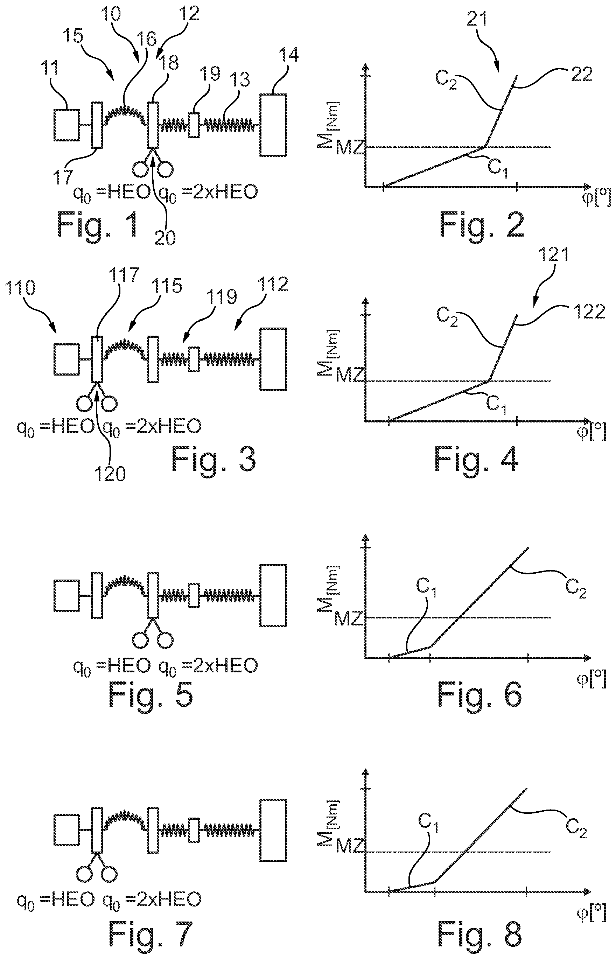

Die Figur 1 zeigt schematisch den Antriebsstrang 10 mit der in zwei Betriebszuständen beispielsweise wahlweise mit vier oder zwei Zylindern betreibbbaren Brennkraftmaschine 11 und der Drehschwingungsdämpfungsvorrichtung 12 sowie dem drehelastisch mittels der Drehelastizität 13 angekoppelten Getriebe und die Fahrzeugkarosserie nur andeutenden Einheit 14. Die Drehschwingungsdämpfungsvorrichtung 12 ist aus dem als geteiltes Schwungrad 16 (ZMS) mit der primären Schwungmasse 17 und der sekundären Schwungmasse 18 gebildeten ersten Drehschwingungsdämpfer 15, dem nachgeschalteten, in einer Kupplungsscheibe einer Reibungskupplung integrierten zweiten Drehschwingungsdämpfer 19 und dem sekundärseitig angeordneten Fliehkraftpendel 20 gebildet. Hierbei ist dem ersten, zweistufigen Drehschwingungsdämpfer 15 eine Federeinrichtung mit den Federkonstanten C1, C2 zugeordnet. Zur Verbesserung des Drehschwingungsverhaltens des ersten Betriebszustands der Brennkraftmaschine 11 bei Betrieb mit allen, das heißt in diesem Ausführungsbeispiel vier Zylindern, ist das Fliehkraftpendel 20 auf die Haupterregerordnung abgestimmt. Weiterhin ist die zweite Dämpferstufe mit den Federkonstanten C2 höherer Steifigkeit auf den Betrieb im ersten Betriebszustand abgestimmt.

In dem zweiten Betriebszustand liegt aufgrund der Zylinderabschaltung ein geringeres Drehmoment an der Drehschwingungsdämpfungsvorrichtung 12 an, so dass eine Verbesserung des Drehschwingungsverhaltens mittels der ersten, weicheren Dämpferstufe mit den Federkonstanten C1 erzielt wird. Der zweite Drehschwingungsdämpfer 19 kann wahlweise oder übergreifend einem Betriebszustand zugeordnet sein.

Das Fliehkraftpendel ist der Haupterregerordnung und einer weiteren Frequenz angepasst, wobei die Frequenz der weiteren Ordnung vorteilhaft die doppelte Frequenz der Haupterregerordnung ist.

Figur 2 zeigt das Diagramm 21, in dem in der Drehmomentkennlinie 22 das Drehmoment des ersten Drehschwingungsdämpfers 15 der Figur 1 gegen den Drehwinkel ϕ der

Schwungmassen 17, 18 aufgetragen ist. Da in dem zweiten Betriebszustand der Brennkraftmaschine 11 deren maximales Abschaltdrehmoment MZ mit abgeschalteten Zylindern entsprechend verringert ist, kann mittels der Dämpferstufe mit der Feder-konstante C1und mit dem Fliehkraftpendel 20eine ausreichende Dämpfungswirkung erzielt werden, während bei zugeschalteten Zylindern im ersten Betriebszustand bei über dem Abschaltdrehmoment MZ liegenden Drehmomenten die zweite Dämpferstufe mit der Federkonstante C2 und das Fliehkraftpendel 20 wirksam sind.

Figur 3 zeigt im Unterschied zu dem Antriebsstrang 10 der Figur 1 den Antriebsstrang 110, bei dem die Drehschwingungsdämpfungsvorrichtung 112 mit dem ersten Drehschwingungsdämpfer 115 und dem zweiten Drehschwingungsdämpfer 119 das primärseitig auf der Schwungmasse 117 angeordnete Fliehkraftpendel 120 aufweist.

Das Fliehkraftpendel 120 ist dabei auf die Haupterregerordnung der Brennkraftmaschine bei Betrieb aller Zylinder und auf die doppelte Haupterregerordnung abgestimmt.

Figur 4 zeigt das aus dem Drehschwingungsdämpfer 115 der Fig. 3 resultierende Diagramm 121 mit der Drehmomentkennlinie 122 mit den den beiden Dämpferstufen entsprechend Diagramm 21 der Figur 2 zuordenbaren Federkonstanten C1, C2.

Die Figuren 5 und 7 entsprechen im Wesentlichen den Figuren 1 und 3, wobei die Dämpfungskonstante C1 kleiner ist, somit die Dämpfung der ersten Stufe weicher ist. Dies ist in den Figuren 6 und 8 in den entsprechenden Diagrammen zu erkennen. Die Stufe C1 ist flacher und im Drehwinkel kürzer. Der Übergang zur zweiten Stufe C2 erfolgt bereits bei Drehmomenten unter dem Wert MZ.

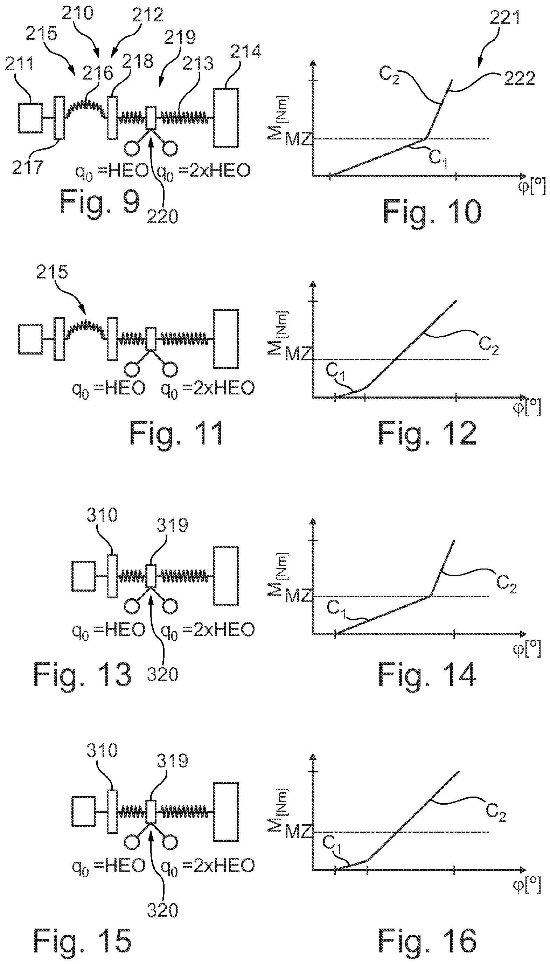

Die Figur 9 zeigt schematisch den Antriebsstrang 210 mit der auch in zwei Betriebszuständen beispielsweise wahlweise mit vier oder zwei Zylindern betreibbbaren Brennkraftmaschine 211 und der Drehschwingungsdämpfungsvorrichtung 212 sowie dem drehelastisch mittels der Drehelastizität 213 angekoppelten Getriebe und die Fahrzeugkarosserie nur andeutenden Einheit 214. Die Drehschwingungsdämpfungsvorrichtung 212 ist aus dem als geteiltes Schwungrad 216 (ZMS) mit der primären Schwungmasse 217 und der sekundären Schwungmasse 218 gebildeten ersten Drehschwingungsdämpfer 215, dem nachgeschalteten, in einer Kupplungsscheibe einer Reibungskupplung integrierten zweiten Drehschwingungsdämpfer 219 und dem sekundärseitig angeordneten Fliehkraftpendel 220 gebildet.

Hierbei ist dem ersten, zweistufigen Drehschwingungsdämpfer 215 eine Federeinrichtung mit den Federkonstanten C1, C2 zugeordnet. Zur Verbesserung des Drehschwingungsverhaltens des ersten Betriebszustands der Brennkraftmaschine 211 bei Betrieb mit allen, das heißt in diesem Ausführungsbeispiel vier Zylindern, ist das Fliehkraftpendel 220 auf die Haupterregerordnung abgestimmt. Weiterhin ist die zweite Dämpferstufe mit den Federkonstanten C2 höherer Steifigkeit auf den Betrieb im ersten Betriebszustand abgestimmt.

In dem zweiten Betriebszustand liegt aufgrund der Zylinderabschaltung ein geringeres Drehmoment an der Drehschwingungsdämpfungsvorrichtung 212 an, so dass eine Verbesserung des Drehschwingungsverhaltens mittels der ersten, weicheren Dämpferstufe mit den Federkonstanten C1 erzielt wird. Der zweite Drehschwingungsdämpfer 219 kann wahlweise oder übergreifend einem Betriebszustand zugeordnet sein.

Das Fliehkraftpendel 220 ist der Haupterregerordnung und einer weiteren Frequenz angepasst, wobei die Frequenz der weiteren Ordnung vorteilhaft die doppelte Frequenz der Haupterregerordnung ist. Auch kann die zweite Frequenz anderweitig gewählt werden. Das Fliehkraftpendel 220 ist der Kupplungsscheibe 219 zugeordnet.

Figur 10 zeigt das Diagramm 221, in dem in der Drehmomentkennlinie 222 das Drehmoment des ersten Drehschwingungsdämpfers 215 der Figur 1 gegen den Drehwinkel ϕ der Schwungmassen 217, 218 aufgetragen ist. Da in dem zweiten Betriebszustand der Brennkraftmaschine 211 deren maximales Abschaltdrehmoment MZ mit abgeschalteten Zylindern entsprechend verringert ist, kann mittels der Dämpferstufe mit der Feder-konstante C1 und mit dem Fliehkraftpendel 220 auf der Kupplungsscheibe 219 eine ausreichende Dämpfungswirkung erzielt werden, während bei zugeschalteten Zylindern im ersten Betriebszustand bei über dem Abschaltdrehmoment MZ liegenden Drehmomenten die zweite Dämpferstufe mit der Federkonstante C2 und das Fliehkraftpendel 220 auf der Kupplungsscheibe zusammen wirksam sind.

Die Figur 11 und die Figur 12 entsprechen im Wesentlichen den Figuren 9 und 10, wobei die Dämpfungskonstante C1 kleiner ist, somit die Dämpfung der ersten Stufe des ersten Drehschwingungsdämpfers 215 weicher ist. Dies ist in der Figuren 12in dem Diagramm zu erkennen. Die Stufe C1 ist flacher und im Drehwinkel kürzer. Der Übergang zur zweiten Stufe C2 erfolgt bereits bei Drehmomenten unter dem Wert MZ.

Die Figuren 13 bis 16 entsprechen im Wesentlichen den Figuren 9 bis 12, wobei in den Antriebssträngen der Figuren 13 bis 16 statt eines Zweimassenschwungrads mit Drehschwingungsdämper 215 ein starres Schwungrad 310 eingesetzt wird. Die Anordnung des Fliehkraftpendels 320 bleibt an der Kupplungsscheibe 319 angeordnet.

### Bezugszeichenliste

- 10: Antriebsstrang
- 11: Brennkraftmaschine
- 12: Drehschwingungsdämpfungsvorrichtung
- 13: Drehelastizität
- 14: Fahrzeugkarosserie
- 15: Drehschwingungsdämpfer
- 16: geteiltes Schwungrad (ZMS)
- 17: primäre Schwungmasse
- 18: sekundäre Schwungmasse
- 19: Drehschwingungsdämpfer
- 20: Fliehkraftpendel
- 21: Diagramm
- 22: Drehmomentkennlinie
- 110: Antriebsstrang
- 112: Drehschwingungsdämpfungsvorrichtung
- 115: Drehschwingungsdämpfer
- 117: Schwungmasse
- 119: Drehschwingungsdämpfer
- 120: Fliehkraftpendel
- 121: Diagramm
- 210: Antriebsstrang
- 211: Brennkraftmaschine
- 212: Drehschwingungsdämpfungsvorrichtung
- 213: Drehelastizität
- 214: Fahrzeugkarosserie
- 215: Drehschwingungsdämpfer
- 216: geteiltes Schwungrad (ZMS)
- 217: primäre Schwungmasse
- 218: sekundäre Schwungmasse
- 219: Drehschwingungsdämpfer
- 220: Fliehkraftpendel
- 221: Diagramm
- 222: Drehmomentkennlinie
- 310: Schwungrad
- 319: Kupplungsscheibe
- 320: Fliehkraftpendel

## Patentansprüche

1. Antriebsstrang (10,110,210) mit einer Brennkraftmaschine (11,211) mit einer vorgegebenen Anzahl von Zylindern mit einem ersten Betriebszustand, in dem alle Zylinder betrieben werden, und einem zweiten Betriebszustand, in dem ein Teil der Zylinder abgeschaltet ist, und mit einer Drehschwingungsdämpfungsvorrichtung(12,112,212) mit zumindest einem Drehschwingungsdämpfer (15,19,115,119,215,219,319) und mit zumindest einem Fliehkraftpendel (20,120,220,320), wobei das Fliehkraftpendel (20,120,220,320) auf ein Drehschwingungsverhalten des ersten Betriebszustands und auf das Drehschwingungsverhalten des zweiten Betriebszustandes abgestimmt ist, **dadurch gekennzeichnet, dass** das Fliehkraftpendel (20,120,220,320) auf die Haupterregerordnung der Brennkraftmaschine (11,211) im ersten Betriebszustand und auf die doppelte Haupterregerordnung der Brennkraftmaschine (11,211) im ersten Betriebszustand abgestimmt ist.

2. Antriebsstrang nach Anspruch 1, **dadurch gekennzeichnet, dass** das Fliehkraftpendel (20,120,220,320) auch auf die Haupterregerordnung der Brennkraftmaschine (11,211) im zweiten Betriebszustand abgestimmt ist.

3. Antriebsstrang nach Anspruch 1 oder 2, **dadurch gekennzeichnet, dass** die Drehschwingungsdämpfungsvorrichtung(21,112,212) zumindest einen ersten Drehschwingungsdämpfer (15,115,215) aufweist, der als Zweimassenschwungrad (16,216) mit Primärmasse (17,217) und Sekundärmasse (18,218) und einer dazwischen wirkenden Dämpfungsstufe und/oder als Drehschwingungsdämpfer (19,219,319) in einer Kupplungsscheibe einer im Antriebsstrang zwischen Brennkraftmaschine und Getriebe angeordneten Reibungskupplung ausgebildet ist.

4. Antriebsstrang nach einem der vorhergehenden Ansprüche, **dadurch gekennzeichnet, dass** das Fliehkraftpendel (20,120) auf der Primärmasse oder der Sekundärmasse des ersten Drehschwingungsdämpfers angeordnet ist.

5. Antriebsstrang nach einem der vorhergehenden Ansprüche, **dadurch gekennzeichnet, dass** das Fliehkraftpendel (220) auf der Reibungskupplung oder auf dem Drehschwingungsdämpfer der Kupplungsscheibe der Reibungskupplung angeordnet ist.

6. Antriebsstrang (10,110,210) mit einer Brennkraftmaschine (11,211) mit einer vorgegebenen Anzahl von Zylindern mit einem ersten Betriebszustand, in dem alle Zylinder betrieben werden, und einem zweiten Betriebszustand, in dem ein Teil der Zylinder abgeschaltet ist, und mit einer Drehschwingungsdämpfungsvorrichtung(12,112,212) mit zumindest einem Drehschwingungsdämpfer (15,19,115,119,215,219,319) und mit zumindest einem Fliehkraftpendel (20,120,220,320), wobei das Fliehkraftpendel (20,120,220,320) auf ein Drehschwingungsverhalten des ersten Betriebszustands und auf das Drehschwingungsverhalten des zweiten Betriebszustandes abgestimmt ist, **dadurch gekennzeichnet, dass** das Fliehkraftpendel (20,120,220,320) zumindest eine erste Pendelmasse aufweist, welche auf die Haupterregerordnung der Brennkraftmaschine im ersten Betriebszustand abgestimmt ist und zumindest eine zweite Pendelmasse aufweist, welche auf die doppelte Haupterregerordnung der Brennkraftmaschine im ersten Betriebszustand abgestimmt ist.

7. Antriebsstrang nach einem der vorhergehenden Ansprüche, **dadurch gekennzeichnet, dass** das Fliehkraftpendel (20,120,220,320) zwei oder mehr erste Pendelmassen aufweist und zwei oder mehr zweite Pendelmassen aufweist.

8. Antriebsstrang nach einem der vorhergehenden Ansprüche, **dadurch gekennzeichnet, dass** das Massenverhältnis der Masse der ersten Pendelmasse bzw. Pendelmassenzu der Masse der zweiten Pendelmasse bzw. Pendelmassen gleich oder ungleich ist, wobei es insbesondere 50:50 oder 60:40 ist.

## Claims

1. A powertrain (10,110,210) having an internal combustion engine (11,211) with a predetermined number of cylinders with a first operating state, in which all cylinders are operated, and a second operating state, in which some of the cylinders are switched off, and having a torsional vibration damping device (12,112,212) with at least one torsional vibration damper (15,19,115,119,215,219,319) and with at least one centrifugal pendulum (20,120,220,320), wherein the centrifugal pendulum (20,120,220,320) is tuned to a torsional vibration behaviour of the first operating state and to the torsional vibration behaviour of the second operating state, **characterised in that** the centrifugal pendulum (20,120,220,320) is matched to the main exciter order of the internal combustion engine (11,211) in the first operating state and to the double main exciter order of the internal combustion engine (11,211) in the first operating state.

2. The powertrain according to Claim 1, **characterised in that** the centrifugal pendulum (20,120,220,320) is also matched to the main exciter order of the internal combustion engine (11,211) in the second operating state.

3. The powertrain according to Claim 1 or 2, **characterised in that** the torsional vibration damping device (21,112,212) has at least one first torsional vibration damper (15,115,215), which is designed as a dual-mass flywheel (16,216) with primary mass (17,217) and secondary mass (18,218) and a damping stage acting in between and/or as a torsional vibration damper (19,219,319) in a clutch disc of a friction clutch arranged in the powertrain between the internal combustion engine and the transmission.

4. The powertrain according to one of the preceding claims, **characterised in that** the centrifugal pendulum (20, 120) is arranged on the primary mass or the secondary mass of the first torsional vibration damper.

5. The powertrain according to one of the preceding claims, **characterised in that** the centrifugal pendulum (220) is arranged on the friction clutch or on the torsional vibration damper of the clutch disc of the friction clutch.

6. A powertrain (10,110,210) having an internal combustion engine (11,211) with a predetermined number of cylinders with a first operating state, in which all cylinders are operated, and a second operating state, in which some of the cylinders are switched off, and having a torsional vibration damping device (12,112,212) with at least one torsional vibration damper (15,19,115,119,215,219,319) and with at least one centrifugal pendulum (20,120,220,320), wherein the centrifugal pendulum (20,120,220,320) is tuned to a torsional vibration behaviour of the first operating state and to the torsional vibration behaviour of the second operating state, **characterised in that** the centrifugal pendulum (20,120,220,320) has at least one first pendulum mass, which is matched to the main exciter order of the internal combustion engine in the first operating state and at least one second pendulum mass, which is matched to the double main exciter order of the internal combustion engine in the first operating state.

7. The powertrain according to one of the preceding claims, **characterised in that** the centrifugal pendulum (20,120,220,320) has two or more first pendulum masses and two or more second pendulum masses.

8. The powertrain according to one of the preceding claims, **characterised in that** the mass ratio of the mass of the first pendulum mass or pendulum masses to the mass of the second pendulum mass or pendulum masses is the same or different, wherein it is in particular 50:50 or 60:40.

## Revendications

1. Groupe de propulsion (10,110,210) comprenant un moteur à combustion interne (11,211) pourvu d'un nombre prédéfini de cylindres, présentant un premier mode de fonctionnement, dans lequel tous les cylindres fonctionnent et présentant un second mode de fonctionnement, dans lequel une partie des cylindres est mise hors service et comprenant un dispositif d'amortissement des vibrations de torsion (12,112,212) pourvu d'au moins un amortisseur de vibrations de torsion (15,19,115,119,215,219,319) et d'au moins un pendule centrifuge (20,120,220,320), dans lequel le pendule centrifuge (20,120,220,320) est adapté à un comportement de vibrations de torsion du premier mode de fonctionnement et au comportement de vibrations de torsion du second mode de fonctionnement, **caractérisé en ce que** le pendule centrifuge (20,120,220,320) est adapté à l'ordre d'excitation principal du moteur à combustion interne (11,211) dans le premier mode de fonctionnement et à l'ordre d'excitation principal double du moteur à combustion interne (11,211) dans le premier mode de fonctionnement.

2. Groupe de propulsion selon la revendication 1, **caractérisé en ce que** le pendule centrifuge (20,120,220,320) est également adapté à l'ordre d'excitation principal du moteur à combustion interne (11,211) dans le second mode de fonctionnement.

3. Groupe de propulsion selon la revendication 1 ou 2, **caractérisé en ce que** le dispositif d'amortissement des vibrations de torsion (21,112,212) présente au moins un premier amortisseur de vibrations de torsion (15,115,215), qui est conçu comme volant bimasse (16,216) pourvu d'une masse primaire (17,217) et d'une masse secondaire (18,218) et un étage d'amortissement agissant entre elles et/ou comme un amortisseur de vibrations de torsion (19,219,319) dans un disque d'embrayage d'un embrayage à friction disposé dans le groupe de propulsion entre le moteur à combustion interne et la boîte de vitesses.

4. Groupe de propulsion selon l'une quelconque des revendications précédentes, **caractérisé en ce que** le pendule centrifuge (20,120) est disposé sur la masse primaire ou la masse secondaire du premier amortisseur de vibrations de torsion.

5. Groupe de propulsion selon l'une quelconque des revendications précédentes, **caractérisé en ce que** le pendule centrifuge (220) est disposé sur l'embrayage à friction ou sur l'amortisseur de vibrations de torsion du disque d'embrayage de l'embrayage à friction.

6. Groupe de propulsion (10,110,210) comprenant un moteur à combustion interne (11,211) pourvu d'un nombre prédéfini de cylindres, présentant un premier mode de fonctionnement, dans lequel tous les cylindres fonctionnent et présentant un second mode de fonctionnement, dans lequel une partie des cylindres est mise hors service et comprenant un dispositif d'amortissement des vibrations de torsion (12,112,212) pourvu d'au moins un amortisseur de vibrations de torsion (15,19,115,119,215,219,319) et d'au moins un pendule centrifuge (20,120,220,320), dans lequel le pendule centrifuge (20,120,220,320) est adapté à un comportement de vibrations de torsion du premier mode de fonctionnement et au comportement de vibrations de torsion du second mode de fonctionnement, **caractérisé en ce que** le pendule centrifuge (20,120,220,320) présente au moins une masse pendulaire, qui est adaptée à l'ordre d'excitation principal du moteur à combustion interne dans le premier mode de fonctionnement et présente au moins une seconde masse pendulaire, qui est adaptée à l'ordre d'excitation principal double du moteur à combustion interne dans le premier mode de fonctionnement.

7. Groupe de propulsion selon l'une quelconque des revendications précédentes, **caractérisé en ce que** le pendule centrifuge (20,120,220,320) présente au moins deux premières masses pendulaires et présente au moins deux secondes masses pendulaires.

8. Groupe de propulsion selon l'une quelconque des revendications précédentes, **caractérisé en ce que** le rapport de masse de la masse de la ou des premières masses pendulaires à la masse de la ou des secondes masses pendulaires est identique ou différent, dans lequel il est en particulier de 50:50 ou 60:40.
